# EUROPEAN PATENT APPLICATION

(11) **EP 2 101 289 A2**
(43) Date of publication of application: **16.09.2009**
(21) Application number: 09154093.0
(22) Date of filing: 02.03.2009
(51) Int. Cl.: G06N 5/02

(54) **Distributed cognitive architecture**

(30) Priority: 05.03.2008 US 42648
(71) Applicant: The Boeing Company, Chicago, IL 60606-2016 (US)
(72) Inventor: Ramesh, Tirumale K., Centrevill, VA 20120 (US); Meier, John L., St. Charles, 63303 (US)
(74) Representative: Witte, Weller & Partner

(57) **Abstract**

A distributed cognitive architecture may extend across multiple systems of networked nodes and/or a wireless network infrastructure. The distributed cognitive architecture may be configured to use intelligent reasoning for actions and configurations extending across the multiple systems of networked nodes and/or wireless network infrastructure (Fig. 1).

## Description

### BACKGROUND

The present disclosure relates to methods and architectures for configuration, management, and use of distributed cognitive architectures for communication and sensor networks.

Cognitive architectures may include reasoning, problem solving, decision making, learning, etc. For example, distributive edge intelligence (DEI) may be targeted at moving processing, advanced network management, and security and cognitive control to the edge of the network. Distributed decision making may be the key to transforming information to knowledge enabling information superiority. The use of intelligent agents to distribute algorithms, to locate and schedule shared services, and to operate in a dynamic low bandwidth wireless environment may demonstrate the value of distributed intelligence to achieve information superiority.

Intelligent edge computing may use intelligent mobile, light weight computing devices to host a society of intelligent agents in distributed, peer-to-peer computing environments supporting network management, and other large scale system applications. For example, "edge" computing devices such as mobile phones with multimedia applications, BlackBerrys, and Personal Data Assistants may act as a peer to peer system and comprise computers at the edge of the internet controlling advanced communication systems. This may require middleware such as services that allow applications to publish and find services, record and save data, maximize energy efficiency, and minimize communications overhead and latency while maximizing data transmission rates. The ability to handle and integrate large amounts of information at the distributed sensors may make it possible for timely and intelligent decisions in order to achieve information superiority.

Modern systems may have to deal with large volumes of information over very limited bandwidths. Large volumes of sensor data gathered at the edge of the network may be transferred to a centralized location for processing the information into knowledge that humans may understand. This may not be feasible with larger sensor networks and limited bandwidth..

Cognitive systems may require advanced reasoning technology to meet the needs of real time dynamic communication and sensor systems. Reasoning about distributed sensor data may require aggregation and dispersion of information using complex communication systems. To be effective, the dispersion may need to reason about regulating the information to fit within the available bandwidth provided by the communication systems. Dynamic communication system control may be the key to the interconnection between humans and machines for effective distribution of information. Software agents and wireless communication systems may provide flexible infrastructures for cognitive architectures designed to improve information superiority.

As one illustrative example of improvements needed for control of communication and sensor systems, modern wireless communication systems may enable multi-user operation. These multi-user communication systems may use flexible admission protocols with statistical multiplexing for improved use of unlicensed spectrum via shared-access of the receiver and transmitter resources. One element of the multi-user communication system may comprise the Multiple Inputs/Multiple Outputs (MIMO) radio. The MIMO may require mitigation of multiple-access interferences such as inter-symbol interference caused by dispersive channels and inter-antenna interferences. The MIMO receiver may be composed of a receiver front end and a decision algorithm for reasoning about communication system performance. The receiver front end may be decomposed into temporal matched filters, beam formers, and rake receivers using decision logic for interconnecting the MIMO components. The MIMO radio may have the ability to reason about and control antenna beam forming using the set of linear elements to optimize the distribution of information while maximizing the use of available spectrum. Decision logic may also be used to correlate channel multi-path coefficients to reduce inter-symbol interferences. Distribution of an inference engine that may reason about the communication system control may be imperative to effectively utilize MIMO features.

A new method of control may be needed to handle coordinated distributed reasoning. Distributed inference engines may be one answer to improving the communication and sensor system control.

### SUMMARY

In one aspect of the disclosure, a distributed cognitive architecture may be provided extending across at least one of multiple systems of networked nodes and a wireless network infrastructure. The distributed cognitive architecture may be configured to use intelligent reasoning for actions and configurations extending across the at least one multiple systems of networked nodes and wireless network infrastructure.

In another aspect of the disclosure, a method of using a distributed cognitive architecture may be provided. In one step, a distributed cognitive architecture may be provided extending across at least one of multiple systems of networked nodes and a wireless network infrastructure. The distributed cognitive architecture may be configured to use intelligent reasoning for actions and configurations extending across the at least one of multiple systems of networked nodes and wireless network infrastructure. In another step, the distributed cognitive architecture may be used to control real time network communication.

### BRIEF DESCRIPTION OF THE DRAWINGS

Figure 1 is a diagram showing elements of a cognitive architecture;
Figure 2 is a box diagram view of a distributed cognitive architecture using an illustrative mesh arrangement of cognitive processors and reconfigurable switches;
Figure 3 is a diagram showing reconfigurable switch configurations in the mesh arrangement of Figure 2;
Figure 4 is a diagram showing distributed edge nodes with cognitive, security, network, and computing elements;
Figure 5 is an illustrative cognitive command or instructions format;
Figure 6 is a box chart of one embodiment of a dynamic reasoning cognitive architecture inference engine;
Figure 7 is a reconfigurable graph illustration for a reconfigurable switch controlled by a cognitive processor;
Figure 8 is a flowchart of one embodiment of a method of using a distributed cognitive architecture;
Figure 9 is a flowchart of one embodiment of a method of using a distributed cognitive architecture;
Figure 10 is a flowchart of one embodiment of a method of using a distributed cognitive architecture;
Figure 11 is a flowchart of one embodiment of a method of using a distributed cognitive architecture; and
Figure 12 shows an illustration of a knowledge management template.

### DESCRIPTION

The following detailed description is of the best currently contemplated modes of carrying out the disclosure. The description is not to be taken in a limiting sense, but is made merely for the purpose of illustrating the general principles of the disclosure, since the scope of the disclosure is best defined by the appended claims.

The instant disclosure discloses a distributed cognitive architecture in support of distributive edge intelligence (DEI).

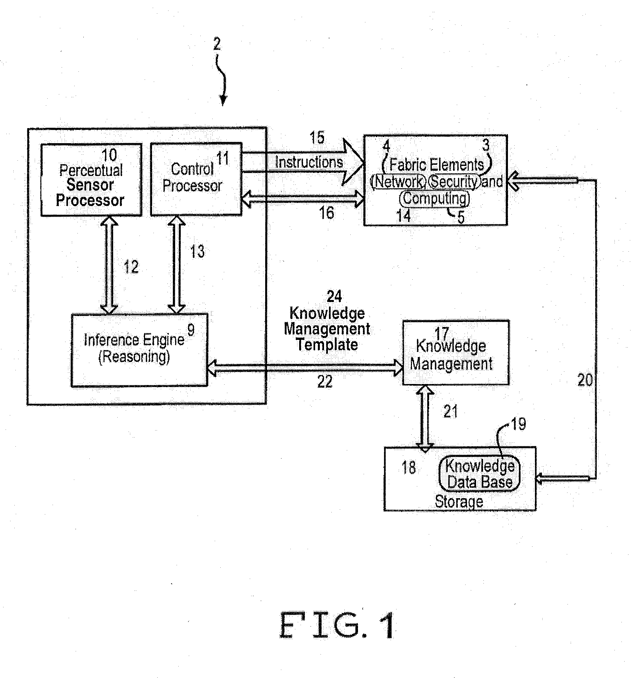

Figure 1 is a diagram showing elements of an embodiment of a cognitive architecture. Cognitive processor 2 may include a perceptual sensor processor 10, control processor 11, and an inference engine 9. The perceptual sensor processor 10 may receive inputs from external events via sensors. From a cognitive radio network perspective, the perceptual sensor processor 10 may scan a spectral band and identify vacant channels available for transmission. Each of the spectrums may allow different frequency ranges and varying numbers of users using the band. The perceptual sensor processor 10 may communicate via channel 12 with the inference engine 9. The inference engine 9 may communicate via channel 13 with the control processor 11, and may also communicate via channel 22 with the knowledge management 17. The knowledge management 17 may communicate via channel 21 with the memory storage 18 and the knowledge database 19. The signal 16 between control processor 11 and fabric elements 14 may comprise the handshake for exchange of cognitive decisions to initiate the security, cognitive, and computing elements 3, 4, and 5 within fabric elements 14. The computing element 5 within fabric elements 14 may communicate with the storage 18 via communication 20 for read and write on the global storage unit. The distributed inference engine 9 may provide reasoning data or perform agent functions by sending instructions 15 from the control processor 11 to the computing infrastructure 5 for execution. The architecture knowledge management 17 may manage the knowledge base 19 for access and saving for subsequent reasoning. The cognitive processor 2 may intelligently monitor, make dynamic decisions in real-time, and control the computing, network and security elements of the infrastructure.

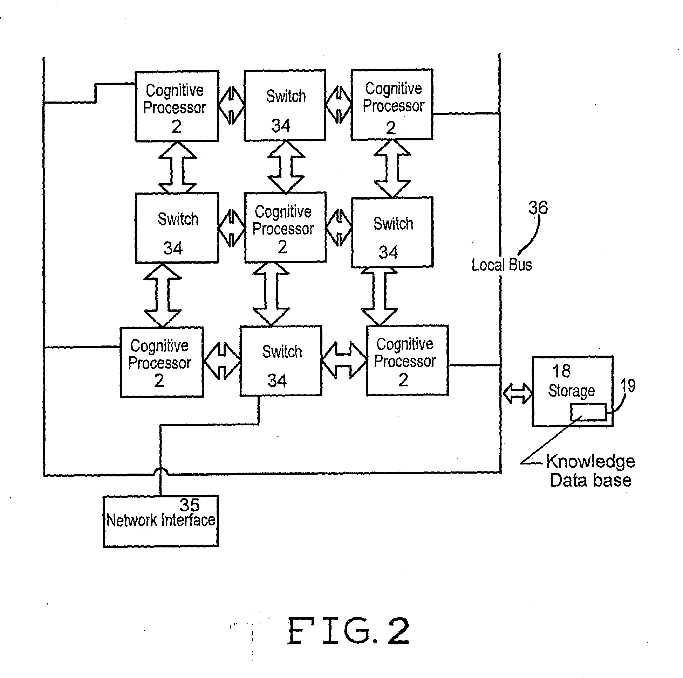

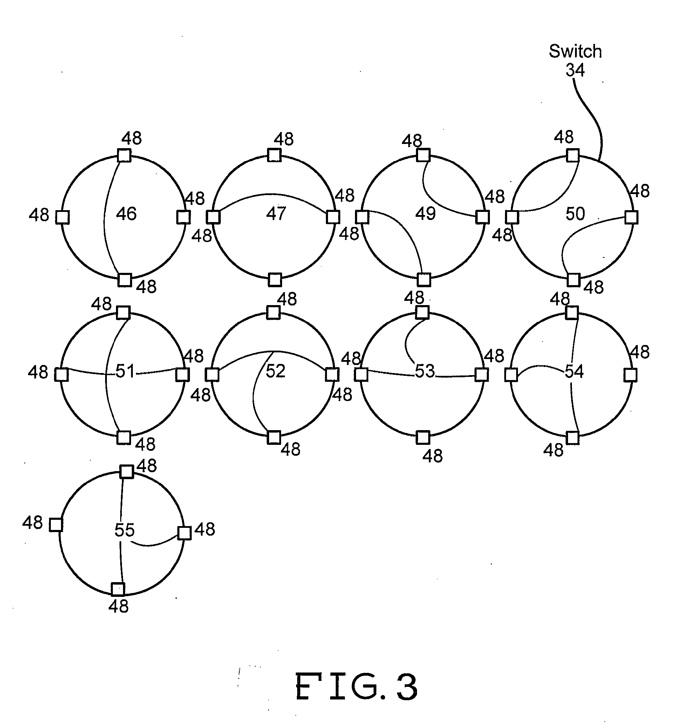

In one embodiment, the distributed architecture may be configured with a plurality of cognitive processors 2 to utilize concurrent processing. For example, Figure 2 shows an exemplary box diagram view of a distributed cognitive architecture having a mesh arrangement of concurrent processing using a matrix of cognitive processors 2 (shown in Figure 1) and switch 34. The mesh arrangement may comprise the following interlinked components: cognitive processors 2; switches 34; network interface 35; local bus 36; storage 18; and knowledge data base 19. In one embodiment, switches 34 may be reconfigurable to support a virtual connectivity of nodes. The backbone of the distributed fabric may comprise the cognitive processor 2 which may drive the connectivity of the other elements. The instructions 15 shown in Figure 1 may be distributed over the mesh arrangement, and may be carried by an intelligent agent, may be executed on the elements of other nodes, and may be carried further into the switch controls of the mesh connections. Each switch 34 may be a 4-port switch with many configurations (shown in Figure 3). These switches may allow for the distributed cognitive processor 2 to virtually connect across the edge nodes thereby carrying their intermediate results to another cognitive processor 2 in another edge node. Storage18 may comprise a memory storage which may also contain knowledge data base 19. The network interface 35 may allows for connecting the distributed arrangement to a network by mapping from the ports of the switches 34 to the standard network interface 35 and may be used to extend the distributed architecture across multiple systems of networked nodes and a wireless network infrastructure.

All of the cognitive processors 2 may run in parallel. While one cognitive processor 2 is working to recognize an image object, another cognitive processor 2 may be deciding what action has to be taken in response to that or another input. At the same time, another cognitive processor 2 may be undertaking an action for another frame of real-time demands. Each switch element 34 may have multiple ports and may be able to attain different port-to-port connectivity based on the configurations. The cognitive processors 2 may be integrated inside the switch elements 34. All units may be passed through the local bus 36. The knowledge data base is managed by knowledge manager 17 shown in Figure 1.

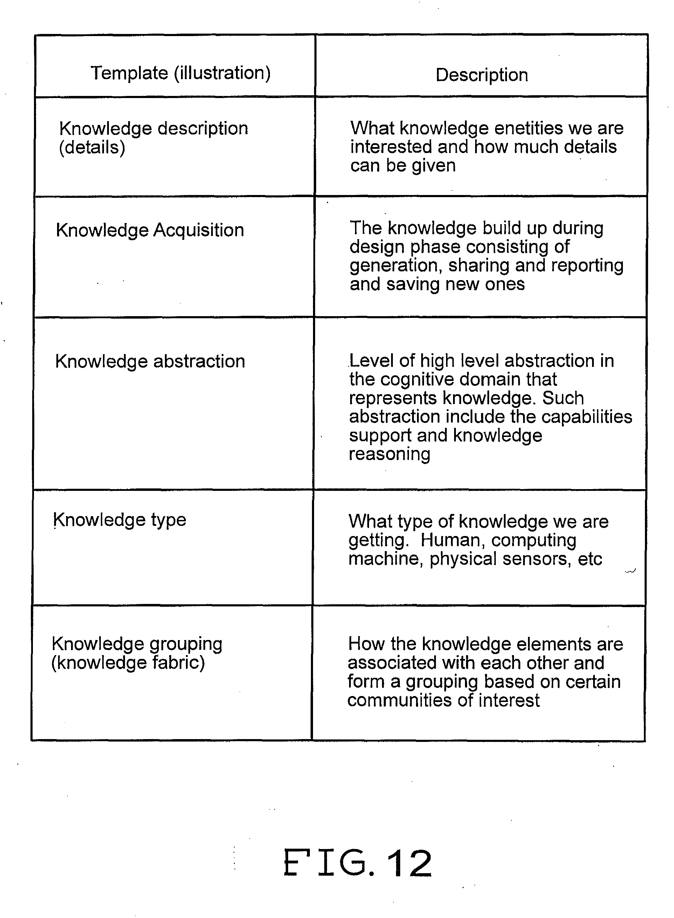

The knowledge may comprise a culmination of environment and computing infrastructure information which may comprise ideas, theories, models, principles of operation, and situational awareness. Such knowledge may need to be gathered, analyzed, and comprehended. As shown in Figure 1, a knowledge management template 24 may be generated by knowledge manager 17 which may be sent over communication 22 to inference engine 9 to make a next activity decision and store any new knowledge in knowledge data base 19. Figure 12 shows an illustration of a knowledge management template 24 describing each element of the template. The knowledge management template 24 may continue to evolve and additional elements may be added to the knowledge management template 24.

Figure 3 shows a block diagram showing the switch element configurations 46, 47, 49, 50, 51, 52, 53, 54 and 55 with 4-ports 48 to each switch. The four numbers of ports shown is only illustrative and may be configurable. The switch configuration may be set in the fabric configuration generated by initialization. Switch configuration 51 may represent a fully bypassed state of the switch so that the switch does no function and may be used to bypass the data. Switch configurations 52, 53, 54 and 55 may be in multi-cast modes in which data at one port is broadcasted to other ports. Switch configurations 46 and 47 may bypass on one pair of ports and may actively make decisions at other ports. A passive configuration may be utilized having switches 34 with no active participation. The switches 34 may bypass information to allow one cognitive processor 2 to receive intermediate decisions from other cognitive processors 2.

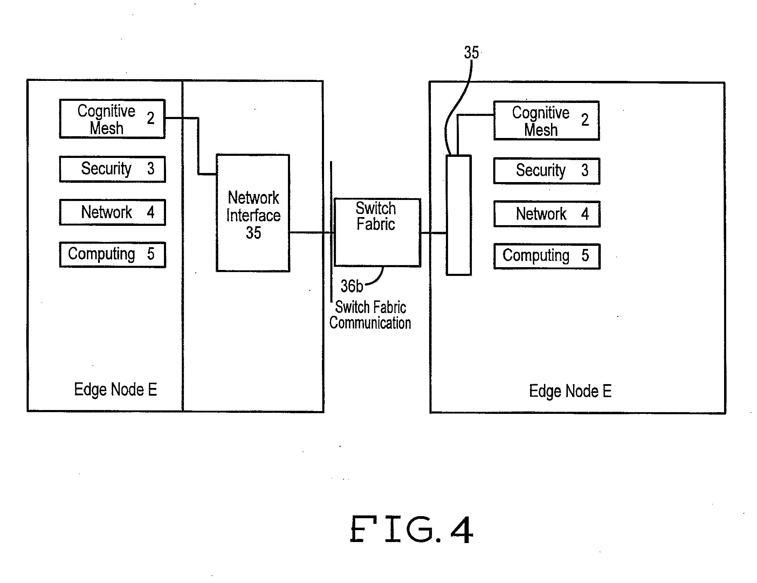

Figure 4 is a diagram showing a distributed edge nodes E having cognitive 2, security 3 network 4, and computing 5 elements. As shown, in distributed edge computing, several edge nodes E may form a virtual farm by interconnecting the cognitive element 2, the security element 3, the network element 4, and the computing element 5. Once the edge nodes pass information via network interface 35, it may be aggregated by a switch fabric 36b.

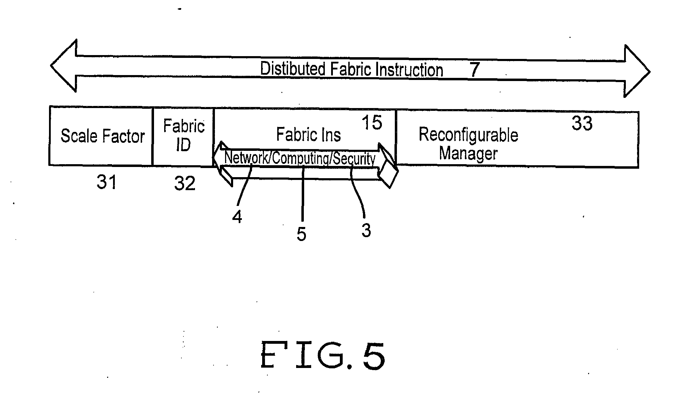

Figure 5 is an illustrative cognitive command or instructions format. Cognitive distributed command or instructions 7 may comprise extended specific instructions communicated to the network 4, computing 5, and security 3 elements via instructions 15 (as shown in Figure 1). Each distributed instruction may culminate and be carried by an agent across the network 4 for collaborative interpretation and execution at the physical edge resources. Scale factor 31 may specify the number of processing elements, the type of configuration for the processing elements, and the number of cores used in the soft processor. The fabric ID 32 may specify the current residency of the elements 2, 3, 4 and 5 in the infrastructure. Fabric ID 32 may comprise a designation at an inter-module level (multiple chips). The reconfigurable manager (slot) 33 may provide control for real-time re-configurability that may include adding dynamic scheduled processing to computing infrastructure 5 for real-time adaptations. The reconfigurable manager 33 may also engage in user transparent hardware acceleration functions of hardware/software hybrid processing, may utilize cognitive agent-based distributed computational entities, and may carry out tasks autonomously to achieve end users' goals. Such goals may be translated and stored in the knowledge data base.

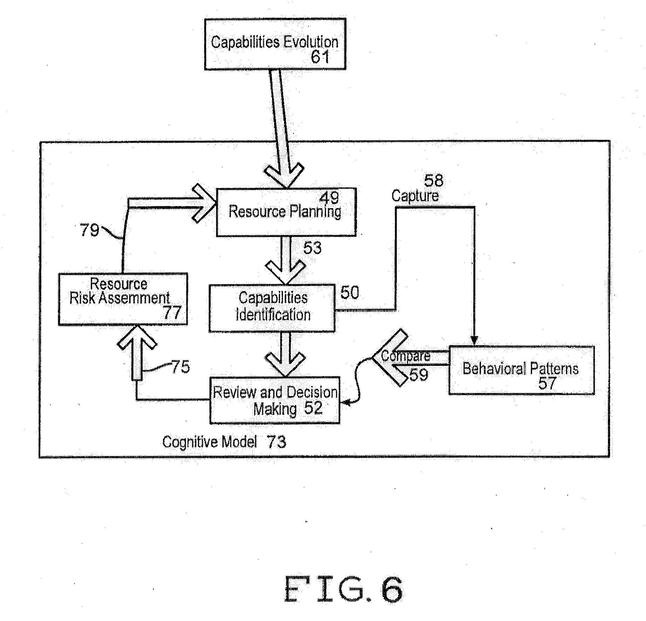

Figure 6 is a diagram showing a model for dynamic reasoning cognitive architecture inference engine 9 shown in Fig 1. In one embodiment, the distributed architecture may follow a model that is analogous to a financial model. For example, the distributed architecture may use financial theory as an analogy to base the model for achieving dynamic reasoning (predict, react and control) about the use of sensor and communication system control. Such an analogy may be made to resource planning to financial decisions, budget decisions, cognitive resource allocation decisions, financial risks, technical risks, social and economic behavior patterns, run-time, processing behavioral patterns, amongst others. The prediction may be provided by capabilities evolution 61 which may track resources and their functions. It may also recognize an estimated cost of deploying resources and any likely constraints for deployment. Prioritization may be necessary in the likely case the total estimated cost exceeds the anticipated goals of delivering an end-to-end solution. The cognitive architecture may react via behavioral parameters and may control by generating decisions and creating dynamic behavioral patterns.

Resource planning 49 and decision making 52 may read the capabilities data from the capabilities evolution 61. This data may be captured by the capabilities identification unit 50 via channel 53 and may be delivered to decision making 52 and also to the behavioral patterns unit 57 via channel 58. The behavioral patterns unit 57 may create behavioral parameters to intelligently make cognitive reasoning and decisions on resource allocation to meet overall goals of the user application. Further, the decision making 52 may decide which pieces of the capabilities per the capabilities evolution 61 will be selected to meet the cost requirement.

Block 77 of the model may identify resource risk assessment. It may receive the resource selection and configuration from decision making 52 via channel 75 and may gather consolidated risk data and capture the unfulfilled user goals taken from the knowledge data base 19 of Figure 1. Such risks may be prioritized, may be fed back to resource planning 49 via channel 79, and may also be entered into knowledge data base 19 shown in Fig 1.

In one embodiment, the distributed cognitive architecture may be configured to assess actions in order to validate capabilities. For example, the cognitive architecture using the behavioral patterns 57 may make the final reasoning and decision to ascertain what and how much resources in terms of soft and reconfigurable processors, memories, and network bandwidth are needed to meet the user goals. If this decision is confirmed for availability, then the run-time execution may be continued. These behavioral patterns 57 may be fed back via channel 59 to be compared with model decision making block 52. As the cognitive processor 2 of the distributed architecture makes intelligent and optimum selections, the overall risk may be reduced and may provide better cost optimization.

The cognitive architecture based on the model 73 may be used for mobile software agents in a wireless sensor network. This may provide information superiority using this new inference engine 9 (shown in Figure 1) for controlling communication and sensor systems. Though the cognitive architecture may be contemplated for wireless mobile networks, it may also be adaptable for intelligent network centric distributed computing with fixed nodes.

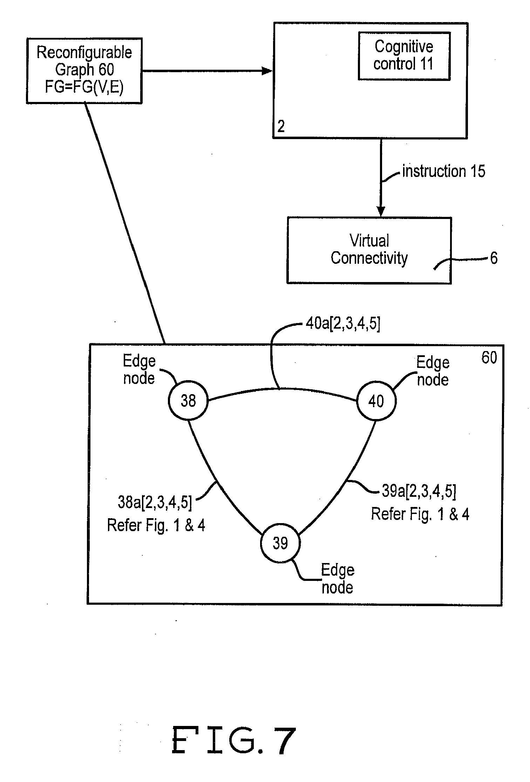

In addition to the intelligent agent tasks of reasoning, planning and learning, etc, the architecture may also include sensory perception 10 shown in Figure 1 for initiating action and generation of effective states, and processes like motivation, attitude, emotional states, etc. A virtual switching mechanism (shown in Figure 7) may be delivered by a distributed switch and network. This may allow for the selection of a group of components of the architecture to be active at a given time. Distributed cognitive architectures in other non-financial disciplines, such as any process needing reasoning and decision making, may emerge from the general parallel distributed architecture.

Figure 7 shows an illustrative reconfigurable graph 60 that may be processed to identify initial configurations and update them. As shown in Figure 7, the reconfigurable graph may be the basis for control of the switch element 34 shown in Figure 2. The graph may comprise the function FG = FG (V, E) with V vertices and E edges. Edge nodes may be mapped as nodes and the edges may specify the interlinking behavior of the cognitive 2 element, the security 3 element, the networking element 4, and the computing element 5 of Figure 4. Interlinking of elemental behaviors may be identified as 38a, 39a and 40a. In other words, links 38a, 39a and 40a may comprise consolidated control from elements 2, 3 , 4 and 5. As these behaviors may constitute dynamicity in terms of decisions and actions, the edges may become reconfigurable and may together constitute virtual connectivity 6 of these elements. By selecting and identifying resource availability and sharing based on constraints at each cognitive node, new configurations may be established for the computing, network and security elements to support new virtual edge computing infrastructure and to form different graph topologies showing edge reconfigurations.

In order to control real time network communication by forming network overlays, there may be a mapping of the network elements into a topology or layout that may be assessed to create a set of overlay nodes. The overlay nodes may form paths or information arteries enabling the efficient transport of network data through the fabric of edge nodes. The cognitive architecture may evaluate the current node network configuration using graph model 60 or other methods to reason about the initial configuration and to propose changes. The virtual network topology may accommodate new edge nodes which may use backbone routing of data. Optimal node mapping to backbones having dynamic backbone construction may require reasoning about RF signal strength, power, directivity, path length, number of hops, latency, and jitter parameters that may be evaluated by the cognitive architect.

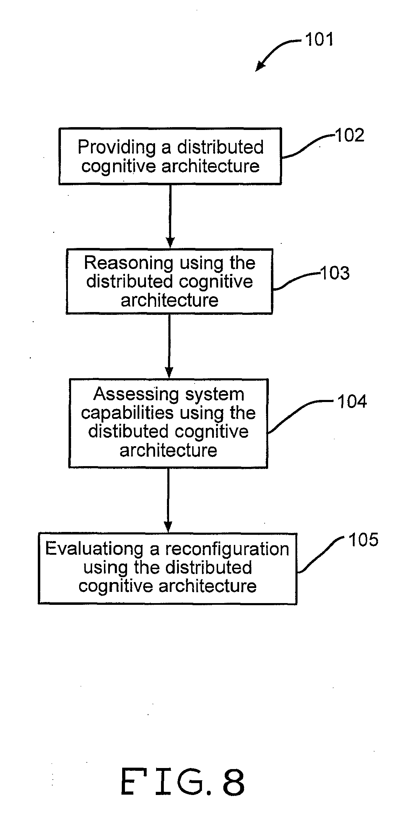

Figure 8 is a flowchart of one embodiment of a method 101 of using a distributed cognitive architecture. In one step 102, a distributed cognitive architecture may be provided extending across at least one of multiple systems of networked nodes and a wireless network infrastructure. The distributed cognitive architecture may be configured to use intelligent reasoning for actions and configurations extending across the at least one multiple systems of networked nodes and wireless network infrastructure. In another step 103, the distributed cognitive architecture may reason about system goals at distributed nodes. In yet another step 104, the distributed cognitive architecture may assess system capabilities of a current configuration. In still another step 105, the distributed cognitive architecture may evaluate a reconfiguration to increase capability.

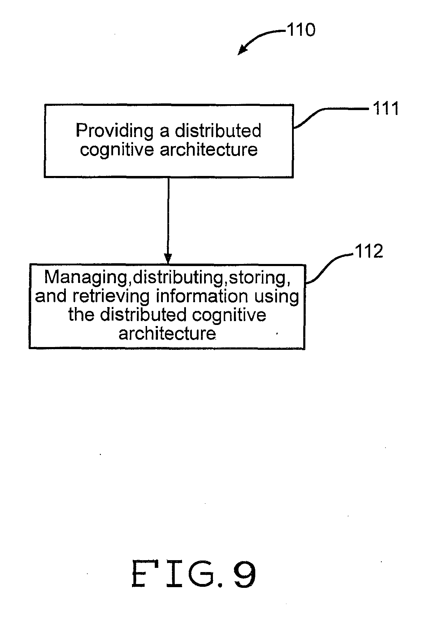

Figure 9 is a flowchart of one embodiment of a method 110 of using a distributed cognitive architecture. In one step 111, a distributed cognitive architecture may be provided extending across at least one of multiple systems of networked nodes and a wireless network infrastructure. The distributed cognitive architecture may be configured to use intelligent reasoning for actions and configurations extending across the at least one multiple systems of networked nodes and wireless network infrastructure. In another step 112, the distributed cognitive architecture may manage, distribute, store, and retrieve information.

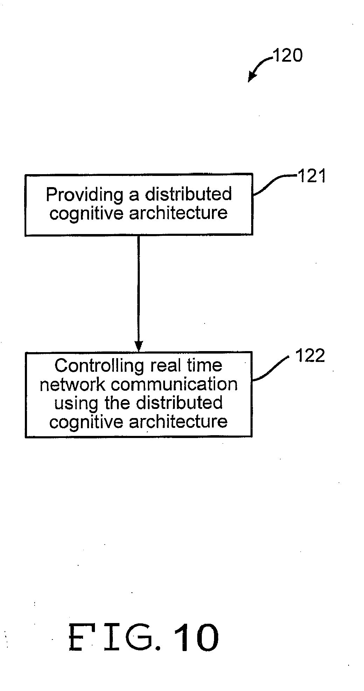

Figure 10 is a flowchart of one embodiment of a method 120 of using a distributed cognitive architecture. In one step 121, a distributed cognitive architecture may be provided extending across at least one of multiple systems of networked nodes and a wireless network infrastructure. The distributed cognitive architecture may be configured to use intelligent reasoning for actions and configurations extending across the at least one multiple systems of networked nodes and wireless network infrastructure. In another step 122, real time network communication may be controlled, using the distributed cognitive architecture, by forming overlays.

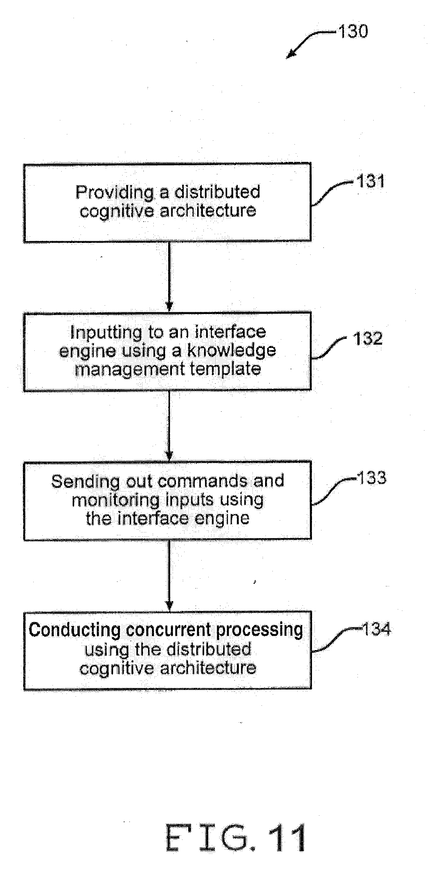

Figure 11 is a flowchart of one embodiment of a method 130 of using a distributed cognitive architecture. In one step 131, a distributed cognitive architecture may be provided extending across at least one of multiple systems of networked nodes and a wireless network infrastructure. The distributed cognitive architecture may comprise an inference engine, and a knowledge management template. The distributed cognitive architecture may be configured to use intelligent reasoning for actions and configurations extending across the at least one multiple systems of networked nodes and wireless network infrastructure. In another step 132, the knowledge management template may input to the inference engine. In still another step 133, the inference engine may send out commands and monitor inputs. In yet another step 134, concurrent processing may be conducted, using the distributed cognitive architecture, in order to achieve intermediate results. The provided distributed cognitive architecture of method 130 may be distributed across hierarchical layers of fabric element associations comprising edge nodes.

Other aspects and features of the present disclosure may be obtained from a study of the drawings, the disclosure, and the appended claims. It should be understood, of course, that the foregoing relates to exemplary embodiments of the disclosure and that modifications may be made without departing from the spirit and scope of the disclosure as set forth in the following claims.

## Claims

1. A distributed cognitive architecture extending across at least one of multiple systems of networked nodes and a wireless network infrastructure, the distributed cognitive architecture comprising:
a plurality of cognitive processors (2), each cognitive processor comprising a perceptual sensor processor (10), a control processor (11), and an inference engine (9);
one or more reconfigurable switches (34), wherein each of the plurality of cognitive processors is connected to at least one switch to form a mesh of cognitive processors; and
a network interface (35) for connecting said mesh of cognitive processors to at least one of the multiple systems of networked nodes and a wireless network infrastructure;
wherein at least one cognitive processor is configured to use intelligent reasoning to control at least one of a computing, network, and security element extending across said at least one multiple systems of networked nodes and wireless network infrastructure.

2. The distributed cognitive architecture of claim 1, wherein the at least one cognitive processor is further configured to assess actions in order to validate capabilities.

3. The distributed cognitive architecture of claim 1, further comprising a knowledge management template (24) comprising an input to the inference engine (9), wherein the inference engine (9) is configured to output commands and to monitor inputs.

4. The distributed cognitive architecture of claim 1, wherein the plurality of cognitive processors of the distributed cognitive architecture are configured to utilize concurrent processing to obtain intermediate results.

5. The distributed cognitive architecture of claim 1, wherein the inference engine is configured for dynamic reasoning that follows a model that is an analogy to a financial model.

6. The distributed cognitive architecture of claim 1, wherein the reconfigurable switch (34) is capable of supporting a virtual connectivity of edge nodes.

7. A method of using a distributed cognitive architecture, the architecture having a plurality of cognitive processors (2), each cognitive processor comprising a perceptual sensor processor (10), a control processor (11), and an inference engine (9), and each cognitive processor connected to at least one reconfigurable switch (34) to form a mesh of cognitive processors, the method comprising:
providing an edge node having a network interface for extending the mesh of cognitive processors across at least one of multiple systems of networked nodes and a wireless network infrastructure; and
configuring at least one cognitive processor to use intelligent reasoning to control at least one of a computing, network, and security element extending across said at least one multiple systems of networked nodes and wireless network infrastructure.

8. The method of claim 7, wherein controlling at least one of a computing, network, and security element using a distributed cognitive architecture comprises:
reasoning, using the distributed cognitive architecture, about system goals at distributed nodes;
assessing, using the distributed cognitive architecture, system capabilities of a current configuration; and
evaluating, using the distributed cognitive architecture, a reconfiguration to increase capability.

9. The method of claim 7, further comprising managing, distributing, storing, and retrieving Information using the distributed cognitive architecture.

10. The method of claim 7, wherein controlling at least one of a computing, network, and security element using the distributed cognitive architecture comprises controlling real time network communication by forming overlays.

11. The method of claim 7, wherein the distributed cognitive architecture further comprises a knowledge management template, and wherein controlling at least one of a computing, network, and security element comprises:
inputting to the inference engine using the knowledge management template; and
sending out commands and monitoring inputs using the inference engine.

12. The method of claim 11, further comprising the step of conducting concurrent processing, using the distributed cognitive architecture, in order to achieve intermediate results.

13. The method of claim 11, further comprising the step of using a financial model for cognitive decisions and actions.
